# FASCICULE DE BREVET EUROPEEN

(11) **EP 4 657 749 B1**
(45) Date de publication et mention de la délivrance du brevet: **19.08.2026**
(21) Numéro de dépôt: 25177592.0
(22) Date de dépôt: 20.05.2025
(51) Int. Cl.: H02S 20/23, H02S 20/24, E04D 11/00

(54) **ENSEMBLE DE COUVERTURE POUR COUVRIR UNE TOITURE D'UN PREMIER MODULE DE CONSTRUCTION**
ABDECKUNGSANORDNUNG ZUR ABDECKUNG EINES DACHS EINES ERSTEN GEBÄUDEMODULS
COVER ASSEMBLY FOR COVERING A ROOF OF A FIRST BUILDING MODULE

(30) Priorité: 28.05.2024 FR 2405500
(43) Date de publication de la demande: 03.12.2025
(73) Titulaire: Altempo, 68126 Bennwihr (FR)
(72) Inventeur: RENAUD, Stéphane, 68126 BENNWIHR (FR); BURDLOFF, Pierre, 68126 BENNWIHR (FR)
(74) Mandataire: Cabinet Boettcher

(56) Documents cités:
- CN-A- 114 598 245
- CN-U- 218 217 179
- US-A1- 2019 305 717

## Description

La présente invention se rapporte au domaine des ensembles de couverture permettant de couvrir au moins une toiture d'un premier module de construction, l'ensemble de couverture comportant au moins un premier panneau photovoltaïque.

### ARRIERE PLAN DE L'INVENTION

On connait des modules de construction préfabriqués qui sont transportables et qui sont utilisés pour former des constructions modulaires offrant des locaux pour différents usages (locaux professionnels ou habitation ou autre).

Afin de produire de l'électricité sur le lieu d'implantation de la construction comprenant un ou plusieurs modules de construction, il est connu d'implanter des panneaux photovoltaïques sur la toiture de ces modules. Le document US 2019/305717 A1 décrit notamment une méthode de construction d'une structure en acier pour un bâtiment, le cadre en acier étant destiné à soutenir un ensemble de panneaux solaires.

La mise en place de panneaux sur une toiture est particulièrement complexe et dangereuse du fait de la hauteur de la toiture et du risque de chute des intervenants.

Il y a donc un besoin pour faciliter l'implantation de tels panneaux photovoltaïques.

### OBJET DE L'INVENTION

Un objet de l'invention est de fournir un ensemble de couverture pour couvrir au moins un premier module de construction ayant une toiture et résolvant tout ou partie des inconvénients précités de l'art antérieur.

### RESUME DE L'INVENTION

A cet effet, selon un premier aspect, l'invention concerne un ensemble de couverture pour couvrir au moins un premier module de construction ayant une toiture, l'ensemble de couverture comportant :
- au moins un premier panneau photovoltaïque pour capter de l'énergie solaire et générer de l'électricité ;
- un premier support dudit au moins un premier panneau photovoltaïque, ledit au moins un premier panneau photovoltaïque définissant une partie d'une surface de couverture pour s'étendre au-dessus de la toiture du premier module de construction.

L'ensemble de couverture est essentiellement caractérisé en ce que le premier support comporte une pluralité de poteaux pour supporter ledit au moins un premier panneau, l'ensemble de couverture comportant un garde-corps porté au moins en partie par certains au moins des poteaux de la pluralité de poteaux du premier support, ledit garde-corps ayant une lisse supérieure définissant une limite périphérique d'une zone centrale de captation d'énergie solaire dans laquelle se trouve ledit au moins un premier panneau photovoltaïque.

L'ensemble de couverture selon ce premier aspect de l'invention permet :
- de former une couverture destinée à s'étendre au-dessus de la toiture d'au moins un premier module de construction (cette couverture formant une protection solaire au-dessus du module de construction pour limiter son exposition aux intempéries et à la chauffe du module de construction sous l'effet d'une exposition solaire ;
- de supporter un ou plusieurs panneaux photovoltaïques au-dessus du module de construction de manière à y capter de l'énergie solaire ; et
- de former une zone de circulation sécurisée entre la toiture du module de construction et la couverture, les poteaux permettant à la fois de maintenir la couverture à distance de la toiture et de supporter un garde-corps périphérique de la zone centrale de captation d'énergie.

Par ailleurs, les poteaux du premier support permettent à la fois de supporter ledit au moins un premier panneau et de porter, au moins en partie, le garde-corps dont la lisse supérieure définit la limite périphérique de la zone centrale de captation d'énergie solaire.

Ainsi, les poteaux de l'ensemble de couverture ont plusieurs fonctions, comme :
- supporter le poids dudit au moins un premier panneau photovoltaïque ;
- précisément positionner la lisse supérieure du garde-corps vis-à-vis de la zone centrale de captation solaire où se trouve ledit au moins un premier panneau photovoltaïque ; et
- supporter au moins une partie du poids du garde-corps, ce qui limite le besoin de fixer le garde-corps directement sur le module de construction recouvert par l'ensemble de couverture.

L'ensemble de couverture selon l'invention autorise une plus grande modularité de construction puisque le garde-corps n'est pas assujetti directement au module de construction mais il est assujetti aux poteaux du premier support qui portent le premier panneau photovoltaïque.

L'ensemble de couverture selon l'invention peut être préassemblé au sol avec au moins une partie de son garde-corps et avec au moins une partie des panneau(x) photovoltaïque(s) avant d'être installé sur la toiture du module de construction.

Le montage de panneaux photovoltaïques sur le module de construction est ainsi sécurisé :
- soit parce que ces panneaux peuvent être assemblés sur l'ensemble de couverture encore au sol avant de le déplacer sur le toit du module de construction ;
- soit parce que l'assemblage / installation des panneaux peut être réalisé directement sur le toit du module de construction déjà sécurisé par le garde-corps de l'ensemble de couverture.

Par rapport au cas particulier de l'art antérieur où un garde-corps doit être assemblé, partie par partie, par un intervenant se trouvant sur le toit, l'ensemble de couverture selon l'invention offre un avantage supplémentaire puisqu'il peut être :
- préassemblé au sol, avec au moins une portion de son garde-corps portée par des poteaux du support de panneaux ; puis être
- déplacé (avec cette au moins une partie de garde-corps) et mis en place sur la toiture.

Par rapport à ce cas particulier de l'art antérieur, l'ensemble de couverture selon l'invention apporte facilité et sécurité d'assemblage, l'intervenant n'étant plus obligé d'intervenir en hauteur, sur un espace non sécurisé.

La présence de tout ou partie du garde-corps sur le premier support de panneau(x) est particulièrement sécurisante.

Le terme garde-corps désigne un ensemble d'éléments formant une barrière de protection s'étendant tout autour de la zone centrale de captation d'énergie solaire, où se trouve ledit au moins un premier panneau photovoltaïque.

Le garde-corps est agencé pour empêcher qu'une personne intervenant au niveau de la zone centrale ne chute dans le vide, au-delà de la limite périphérique définie par le garde-corps et sa lisse supérieure.

Le garde-corps est un équipement de protection collective.

La protection collective, par opposition à une protection individuelle, permet de protéger tout intervenant sans avoir à l'équiper d'un équipement de protection individuelle.

Un équipement de protection individuelle permet, contrairement à un équipement de protection collective, de protéger uniquement la personne qui en est équipée.

Un équipement de protection individuelle est par exemple un harnais associé à une sangle ou une corde reliée à un point fixe ou à une ligne de vie ou à un enrouleur / un système antichute formant un frein et éventuellement associé à un absorbeur de choc en cas de chute.

En cela, l'usage d'un garde-corps est plus sécurisant et moins contraignant, et au demeurant à privilégier selon le code du travail.

En outre, contrairement au garde-corps qui préserve la mobilité de l'intervenant sur la toiture, le port d'un harnais associé à une sangle peut constituer une gêne à la mobilité.

Grâce à l'invention, l'intervenant peut accéder en toute sécurité à la zone centrale de captation d'énergie solaire, par exemple pour y réaliser des opérations de maintenance dudit au moins un premier panneau photovoltaïque ou tout autre équipement en toiture ou la toiture elle-même, tout en circulant sous la couverture délimitée par le ou les panneaux photovoltaïques de l'ensemble de couverture, au niveau de ladite zone centrale de captation d'énergie.

Selon un second aspect, l'invention concerne une construction comportant :
- au moins un premier module de construction ayant une face supérieure plane formant ladite toiture du premier module de construction ; et
- un ensemble de couverture selon l'un quelconque des modes de réalisation de l'ensemble de couverture de l'invention, le premier support étant placé au-dessus de la toiture du premier module de construction et étant porté par ledit premier module de construction.

La construction selon ce second aspect de l'invention présente les mêmes avantages que ceux décrits ci-avant au sujet de l'ensemble de couverture selon le premier aspect de l'invention.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
[Fig. 1a] la figure 1a est une vue en perspective d'un ensemble de couverture 1 selon l'invention (avec 5 panneaux photovoltaïques Pv1 portés par le premier support S1) avant son assemblage sur le toit plat 10a d'un module de construction 10 de forme parallélépipédique rectangle ;
[Fig. 1b] la figure 1b est une vue en perspective par le haut de la construction formée par l'assemblage desdits ensemble de couverture 1 et module de construction 10 de la figure 1a ;
[Fig. 1c] la figure 1c est une vue en perspective depuis un côté de la construction illustrée à la figure 1b ;
[Fig. 2a] la figure 2a est une vue en perspective depuis le haut de l'ensemble de couverture 1 de l'invention, l'ensemble de couverture étant ici en configuration de maintenance avec son premier panneau Pv1 pivoté pour libérer un espace de passage au travers de la couverture Zx (pour simplifier la figure, les panneaux photovoltaïques sont ici mis en transparence et uniquement schématisés par leurs limites périphériques respectives) ;
[Fig. 2b] la figure 2b est une vue en coupe suivant un plan A-A d'une partie de l'ensemble de couverture 1 de la figure 2a ;

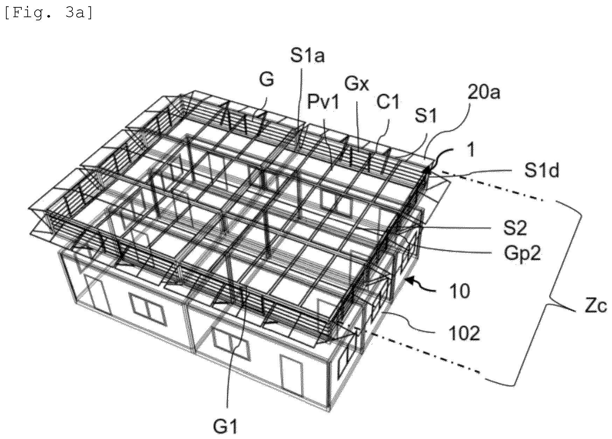

[Fig. 3a] la figure 3a est une vue en perspective de dessus d'un ensemble de couverture 1 selon l'invention dans un mode de réalisation où il est conformé pour couvrir un ensemble de six modules de construction 10, 102, l'ensemble de construction 1 est ici représenté avant d'être posé sur les six toits plats coplanaires des six modules afin de les recouvrir, l'ensemble de construction 1 comportant six supports de panneaux photovoltaïques S1, S2 ayant chacun une superficie projetée dans un plan horizontal identique, en forme et dimensions, à la superficie d'un toit de module de construction projetée dans ce plan horizontal ou inférieure à la superficie d'un toit de module (les toits des modules sont plats et préférentiellement identiques entre eux, tant en forme, en dimensions, et superficie) ;
[Fig. 3b] la figure 3b est une vue en perspective de dessus de la construction 0 selon l'invention formée par l'ensemble de couverture 1 porté par les toits des six modules de construction illustrés à la figure 3a ;
[Fig. 4] la figure 4 est une autre vue en perspective de face de la construction 0 illustrée aux figures 1b et 1c (dans ce mode de réalisation, la construction ne comporte qu'un module de construction et l'ensemble de couverture ne comporte qu'un support de panneaux photovoltaïques portant 5 panneaux au niveau de la zone centrale Zc et plusieurs panneaux photovoltaïques périphériques à l'extérieur de la zone centrale Zc).

### DESCRIPTION DETAILLEE DE L'INVENTION

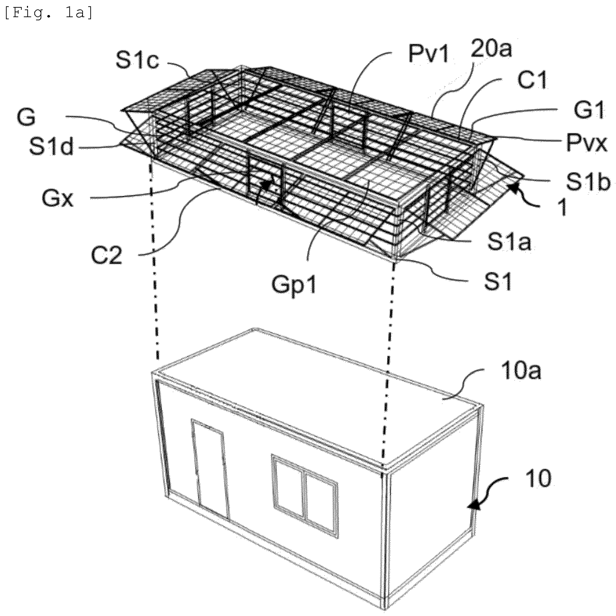

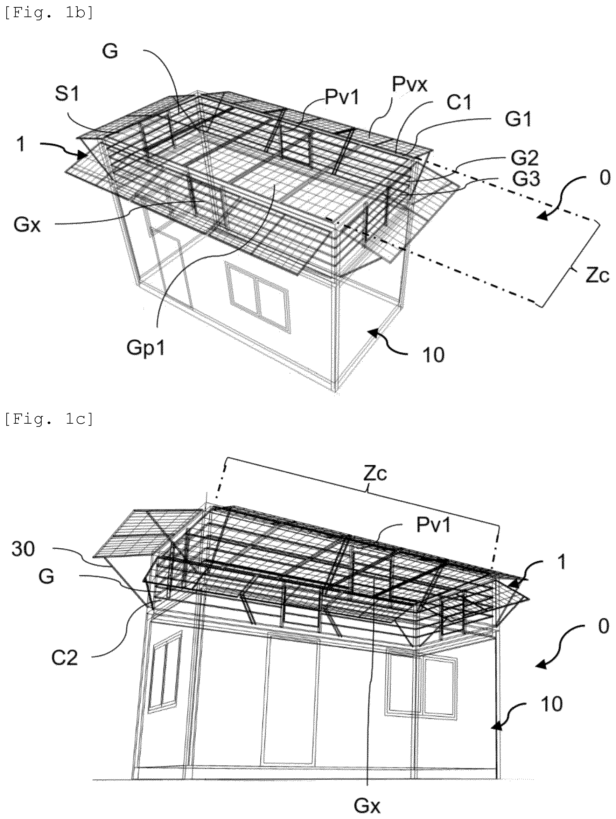

En référence aux figures 1a à 4, l'invention concerne essentiellement une construction 0 comportant :
- au moins un premier module de construction 10 ayant une face supérieure plane formant ladite toiture 10a du premier module de construction 10 ; et
- un ensemble de couverture 0 selon l'invention doté d'au moins un premier support S1 placé au-dessus de la toiture 10a du premier module de construction 10 et exclusivement porté par ledit premier module de construction 10.

Comme on le verra par la suite, la construction 0 peut comporter plusieurs modules de construction, le nombre de ces modules de construction 10, 102 pouvant varier en fonction de l'architecture choisie pour la construction, ces modules ayant préférentiellement une même forme externe parallélépipédique rectangle de manière à avoir une même hauteur, une même longueur et une même largeur, leurs toitures plates respectives étant préférentiellement identiques entre elles pour permettre une modularité d'assemblage de ces modules, leurs toitures respectives étant coplanaires entre elles pour faciliter l'implantation de l'ensemble de couverture 1 selon l'invention sur leurs toitures 10a.

Par toit plat, on entend tout toit dont la ou les pentes éventuelles est / sont strictement inférieure(s) à 6%.

Comme on le comprend de chacune des figures 1a à **4****,** l'ensemble de couverture 1 selon l'invention permet de couvrir au moins un premier module de construction 10 ayant une toiture 10a, l'ensemble de couverture 1 comportant :
- au moins un premier panneau photovoltaïque Pv1 pour capter de l'énergie solaire et générer de l'électricité ; et
- un premier support S1 dudit au moins un premier panneau photovoltaïque Pv1.

Ledit au moins un premier panneau photovoltaïque Pv1 définit une partie d'une surface de couverture pour s'étendre au-dessus de la toiture 10a du premier module de construction 10.

Par définition, un panneau photovoltaïque permet de capter de l'énergie solaire et générer de l'électricité à partir de cette énergie solaire. Les panneaux de l'ensemble de couverture 1 sont électriquement reliés via des connecteurs et des câbles à une armoire électrique.

Ces liaisons électriques des panneaux jusqu'à l'armoire électrique sont réalisées de manière connue et, pour des raisons de clarté, elles ne sont pas représentées sur les figures.

Le premier support S1 comporte une pluralité de poteaux S1a, S1b, S1c, S1d (ici au moins 4 poteaux par support, mais le nombre pourrait varier) pour supporter ledit au moins un premier panneau Pv1.

L'ensemble de couverture 1 comporte aussi un garde-corps G porté au moins en partie par certains au moins des poteaux S1a, S1b, S1c, S1d de la pluralité de poteaux du premier support.

Ce garde-corps G comporte une lisse supérieure G1 qui définit une limite périphérique d'une zone centrale Zc de captation d'énergie solaire dans laquelle se trouve ledit au moins un premier panneau photovoltaïque Pv1.

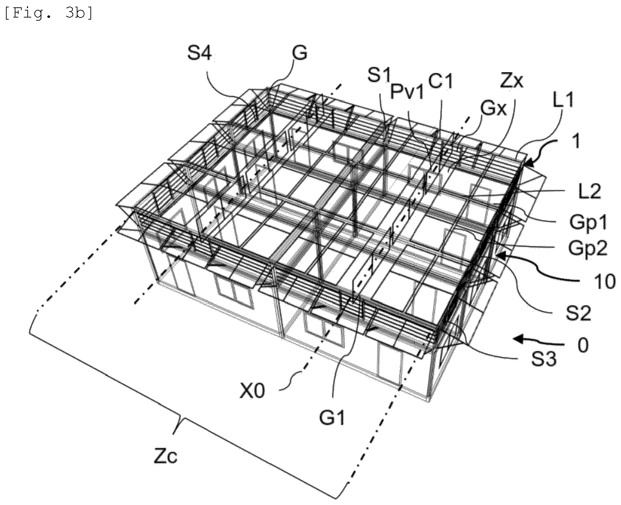

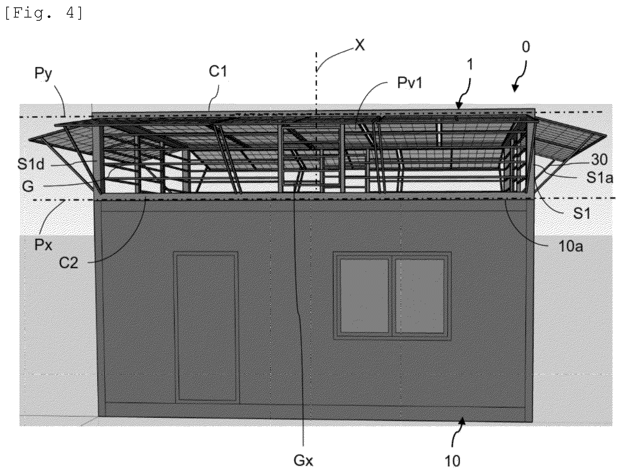

La construction selon l'invention peut comporter un unique module 10, comme sur les figures 1a à 1c et 4 ou plusieurs modules, comme sur les figures 3a et 3b, ces modules de construction 10, 102 étant couverts par un même ensemble de couverture 1 selon l'invention.

La construction illustrée aux figures 3a, 3b montre un exemple de construction dotée de six modules 10, 102 (pour des raisons de clarté seuls deux de ces six modules sont référencés). Chacun des modules possède une même forme externe parallélépipédique rectangle et un toit plat, ces modules étant adjacents entre eux.

Le nombre et l'agencement de ces modules 10, 102 peut varier tout en restant dans le cadre de la présente invention.

Lorsqu'elle comporte plusieurs modules, la construction 0 est telle que l'intégralité du premier support S1 est exclusivement placé à la verticale de la toiture 10a du premier module de construction 10 (pour éviter que ce premier support S1 ne vienne buter contre un autre des supports de la construction).

La construction 0 comportant au moins un deuxième module de construction 102 ayant une face supérieure plane formant une toiture du deuxième module de construction 102.

De manière générale, un module de construction donné présente une forme générale parallélépipédique rectangle dont une face supérieure est plane pour former une toiture plane et rectangulaire du module donné.

Les toitures des premier et deuxième modules de construction 10, 102 sont coplanaires entre elles, un bord rectiligne de la toiture du premier module 10 étant adjacent d'un bord rectiligne de la toiture du deuxième module de construction 102. Préférentiellement, ces bords rectilignes des toitures sont adjacents sur toutes leurs longueurs respectives, cependant, comme chaque support donné porté par un module donné est exclusivement placé au-dessus de la toiture de ce module donné, on pourrait envisager que les bords adjacents des toitures soient décalés longitudinalement sans qu'il y ait un risque de conflit entre les supports. Avec cette caractéristique, il existe une liberté de choix dans la forme générale de la construction qui peut, par exemple comporter un unique alignement de modules ou des modules regroupés en rectangle, en L, ou en U lorsqu'observés en vue de dessus.

L'ensemble de couverture 1 d'une construction à plusieurs modules comporte :
- un deuxième groupe de panneaux photovoltaïques pour capter de l'énergie solaire et générer de l'électricité ; et

- un deuxième support S2 dudit un deuxième groupe de panneaux photovoltaïques, ledit deuxième groupe de panneaux photovoltaïques définissant une partie d'une surface de couverture s'étendant exclusivement au-dessus de la toiture du deuxième module de construction 102.

Le deuxième support S2 comporte une pluralité de poteaux pour supporter ledit deuxième groupe Gp2 de panneaux photovoltaïques.

Enfin ledit garde-corps G est porté, d'une part par certains desdits poteaux du premier support S1 et d'autre part, au moins en partie, par certains au moins des poteaux de la pluralité de poteaux du deuxième support S2.

Le deuxième groupe de panneaux photovoltaïques se trouve dans ladite zone centrale Zc de captation d'énergie solaire délimitée par la lisse supérieure G1 du garde-corps G.

De cette manière :
- le premier module de construction 10 porte le premier support S1 du premier panneau photovoltaïque et plus particulièrement le premier groupe de panneaux photovoltaïques auquel appartient ledit premier panneau photovoltaïque Pv1 ;
- le deuxième module de construction 102 porte le deuxième support S2 du deuxième groupe de panneaux photovoltaïques ; et
- le garde-corps périphérique G de la zone centrale Zc dans laquelle se trouvent les premier et deuxième groupes de panneaux photovoltaïques est porté au moins par des poteaux du premier support S1 et par des poteaux du deuxième support S2.

Il en résulte que :
- d'une part, chaque module de construction 10, 102 porte à lui seul un unique support d'un groupe donné de panneaux photovoltaïques qui lui correspond, sans avoir besoin d'utiliser un autre module de construction pour porter ce groupe donné de panneaux photovoltaïques (ceci facilitant la modularité d'assemblage des modules de construction et des groupes de panneaux
   photovoltaïques) ; et
- d'autre part, le garde-corps G est adapté à la forme de la construction 0 (en fonction du nombre et de la disposition des modules) et est porté au moins par le premier support S1 et au moins par le deuxième support S2.

De cette manière, on a une grande liberté d'assemblage des modules de construction et des groupes de panneaux photovoltaïques sans compromettre la solidité du garde-corps G qui forme une liaison mécanique indirecte entre les différents supports des panneaux photovoltaïques.

Grâce au garde-corps porté par l'ensemble de couverture, la toiture du module peut être utilisée comme voie de circulation protégée en périphérie par garde-corps assemblé sur le support mais pas sur le module de construction (il n'est dès lors pas nécessaire d'équiper chaque module de son propre garde-corps, ce qui imposerait une intervention risquée d'assemblage de garde-corps directement sur la toiture).

Idéalement, le garde-corps est exclusivement porté par des poteaux de support(s) de panneaux de l'ensemble de couverture selon l'invention.

Nous allons maintenant présenter d'autres caractéristiques avantageuses de l'ensemble de couverture 1 selon l'invention. En l'occurrence, nous allons décrire le premier support S1 et les panneaux photovoltaïques qu'il porte, cette description étant applicable, sauf mention contraire, à n'importe lequel des autres supports de panneau de l'ensemble de couverture et à n'importe lequel des panneaux et moyen de son assemblage au support de panneaux correspondant.

Le premier support S1 présente une pluralité de butées axiales définissant ensemble un plan d'appui du premier support Px sur lequel peut reposer le premier support lorsqu'il est porté par le module de construction correspondant.

Grâce aux butées axiales du premier support S1 qui définissent ensemble le plan d'appui du premier support Px, le premier support S1 peut-être exclusivement porté par appui des butées axiales sur une base porteuse (par exemple un plan porteur constitué par la toiture plate).

En l'occurrence, la base porteuse est ici une structure principale dudit premier module de construction, cette structure principale définissant les arêtes rigides de la forme parallélépipédique rectangle du module 10. La structure principale est par exemple constituée de profilés rectilignes reliés entre eux, deux à deux, au niveau de leurs extrémités respectives (ces liaisons sont typiquement réalisées par des soudures ou / et des assemblages boulonnés et ces profilés sont préférentiellement des tubes de section transversale préférentiellement rectangulaire). La structure du module de construction présente une face supérieure plane formant toiture du premier module, cette toiture étant par exemple réalisée par une tôle rigide soudée et / ou boulonnée et / ou vissées et / ou rivetées sur au moins 4 des profilés de la structure qui forment ensemble un cadre définissant les bords externes de la toiture plane rectangulaire du module.

Chaque poteau donné S1a, S1b, S1c, S1d de la pluralité de poteaux du premier support S1 s'étend suivant une direction longitudinale X du poteau donné qui est sécante avec le plan d'appui Px du premier support.

Un angle minimum entre la direction longitudinale X du poteau donné et le plan d'appui Px est généralement compris entre 40° et 90°.

Dans les modes de réalisation de l'ensemble 1 illustré, les directions longitudinales X de chacun des poteaux du premier support S1 sont préférentiellement parallèles entre elles et par conséquent perpendiculaires audit plan d'appui Px.

L'ensemble de couverture 1 présente une surface totale couverte, au moins en partie, par une pluralité de panneaux photovoltaïques qui comprend ledit au moins un premier panneau photovoltaïque et qui est situé dans la zone centrale Zc.

La surface totale couverte est préférentiellement conformée de manière qu'elle interdise tout passage d'une sphère de diamètre supérieur ou égal à 30 cm au travers de la surface totale couverte et entre ladite surface totale couverte et ledit garde-corps G.

Préférentiellement la surface totale couverte recouvre au moins 90%, préférentiellement 100% de la superficie de chaque toiture donnée d'un module de construction.

La lisse supérieure G1 du garde-corps G comporte une surface périphérique supérieure, c'est-à-dire une surface supérieure du garde-corps qui est continue pour définir une main courante périphérique de la zone centrale de captation Zc.

Cette lisse supérieure G1 est intégralement disposée entre 400 mm et 1500 mm, préférentiellement entre 1000 mm et 1100 mm de hauteur par rapport audit plan d'appui Px du premier support.

En fixant la distance entre la surface périphérique supérieure de la lisse supérieure G1 vis-à-vis du plan d'appui Px, on détermine, de manière très simple et précise, la position verticale du garde-corps par rapport à la toiture 10a du premier module de construction 10, cette toiture 10a formant ainsi un niveau de circulation protégé sur le premier module de construction 10.

En effet, puisque l'ensemble de couverture 1 selon l'invention vient se poser sur le module de construction 10, le plan d'appui Px de l'ensemble de couverture est alors disposé sur le module de construction 10, sensiblement au niveau du plan supérieur de sa toiture 10a qui forme alors un niveau de circulation sécurisé.

En cela l'ensemble de couverture selon l'invention permet de transformer une toiture plate 10a d'un module de construction 10 en un espace de captation d'énergie solaire avec un niveau de circulation sécurisé.

La distance de 400 mm est une hauteur minimale pour pouvoir circuler sur la toiture du module où se trouve l'ensemble de couverture 1 tout en se déplaçant entre la toiture et la surface totale couverte par panneaux photovoltaïques(s), les panneaux photovoltaïques interdisant à l'intervenant de se lever et par conséquent de passer au-dessus du garde-corps au risque de chuter.

En installant l'ensemble de couverture 1 selon l'invention sur un module de construction à toiture plate, dans le cas où la limite supérieure de la lisse supérieure est comprise entre 1000 et 1100 mm au-dessus du niveau de circulation Px, on obtient alors d'un garde-corps qui, par rapport au plan de la toiture est conforme, pour ce qui est de la seule hauteur de garde-corps, à l'une quelconque des normes NF E 85-015 de juillet 2019 et SN EN ISO 14122-3 (selon ces normes la limite supérieure de la lisse supérieure doit être comprise entre 1000 et 1100 mm au-dessus du niveau de circulation dès lors que l'intervenant peut y circuler sans que rien ne l'empêche de passer au-dessus du plan dans lequel s'étend la surface supérieure de la lisse supérieure (le plan dans lequel s'étend la surface supérieure de la lisse supérieure correspond au plan Py illustré sur les figures).

Comme indiqué précédemment, il est toutefois envisageable que la distance (hauteur) entre la surface périphérique supérieure de la lisse supérieure G1 et le plan d'appui Px puisse être comprise entre 400 et 1000 mm, c'est-à-dire puisse être inférieure à la valeur minimale de 1000 mm prescrite par lesdites normes.

Cette possibilité est uniquement offerte dans le mode de réalisation précité où la surface totale couverte par panneau(x) est conformée pour interdire le passage d'une sphère de diamètre supérieur ou égal à 30 cm au travers de la surface totale couverte et entre ladite surface totale couverte et ledit garde-corps.

En effet, comme cette caractéristique de la surface totale couverte permet de définir une zone de confinement de l'intervenant sous la surface couverte, la hauteur du garde-corps inférieure à 1000 mm vis-à-vis du plan de circulation Px est alors acceptée.

Préférentiellement, la lisse supérieure G1 forme une main courante qui doit être adaptée pour sa prise en main par un intervenant.

A cette fin, en conformité avec les normes précitées relatives aux garde-corps, la lisse supérieure G1, lorsqu'observée en coupe transversale, présente une superficie totale préférentiellement comprise entre 490 mm2 et 1963 mm2.

Ainsi, lorsqu'observée en coupe transversale, la lisse supérieure G1 peut être préférentiellement un profilé circulaire de diamètre externe compris entre 25 mm (qui correspond à la superficie minimale de 490 mm2) et 50 mm (qui correspond à la superficie maximale de 1963 mm2).

La lisse supérieure G1 est préférentiellement exempte de tout obstacle à une distance d'au moins 100 mm sur toute sa longueur.

La lisse supérieure G1 du garde-corps G forme un cadre supérieur rectangulaire C1 s'étendant dans un plan Py du cadre supérieur C1.

Chaque poteau S1a, S1b, S1c, S1d de la pluralité de poteaux du premier support S1 présente une direction longitudinale propre X qui forme par rapport au plan Py du cadre supérieur C1 un angle compris entre 40° et 90°.

Le cadre supérieur rectangulaire C1 est par nature continu ce qui confère une rigidité d'ensemble et une résistance mécanique au support S1 ainsi qu'au garde-corps G qui est porté par certains au moins de ses poteaux. Les côtés de ce cadre rectangulaire C1 s'étendent chacun dans le plan Py.

Préférentiellement, les directions longitudinales propres X des poteaux sont parallèles entre elles et perpendiculaires par rapport au plan Py du cadre supérieur C1 (chaque direction longitudinale X d'un poteau donné forme un angle de 90° par rapport au plan Py).

Préférentiellement, le garde-corps G présente au moins un premier portillon Gx mobile par rapport au cadre supérieur C1 entre une position fermée et une position ouverte. Le premier portillon Gx en position ouverte libère un passage au travers du garde-corps G de largeur comprise entre 750 mm et 1200 mm.

Préférentiellement, chaque côté de l'ensemble de couverture 1 est équipé d'une portillon similaire audit premier portillon Gx.

Préférentiellement chaque portillon est associé à un dispositif de rappel automatique du portillon vers sa position fermée.

Le dispositif de rappel automatique du portillon vers sa position fermée peut comporter un moyen élastique de rappel et/ou un système à contrepoids.

Un tel portillon Gx permet d'avoir un accès sécurisé au travers du garde-corps G.

Préférentiellement, l'ouverture du portillon se fait par poussée du portillon vers la zone délimitée et entourée par le garde-corps G.

Ainsi, l'intervenant poussant le portillon pour l'ouvrir est incité à aller vers la zone sécurisée, la fermeture automatique du portillon évitant une chute via le passage au travers du garde-corps G.

Comme le passage au travers du garde-corps G s'étend sous le cadre supérieur rectangulaire C1 qui est continu tout autour de la zone centrale de captation Zc, la rigidité de l'ensemble de couverture 1 n'est pas compromise par la présence de portillons.

La largeur maximale du passage libéré par le portillon en position ouverte est inférieure à 1200 mm de manière à respecter les normes NF E 85-015 de juillet 2019 et SN EN ISO 14122-3 qui imposent une distance de passage au travers du garde-corps comprise entre 750 et 1200 mm.

L'accès d'un intervenant sur la toiture du premier module de construction S1 ne peut se faire que via ce passage sécurisé par portillon Gx.

Préférentiellement, le garde-corps (G) comporte une ou plusieurs lisses intermédiaires G2, G3 s'étendant chacune entre la lisse supérieure G1 et le plan d'appui Px du premier support S1 pour avoir une distance entre lisses inférieure à 500 mm.

En l'occurrence, dans chacun des modes de réalisation illustrés sur les figures, le garde-corps G comporte une première lisse intermédiaire G2 qui s'étend entre la lisse supérieure G1 et le plan d'appui Px du premier support S1 ainsi qu'une deuxième lisse intermédiaire G3 parallèle à la première lisse intermédiaire et s'étendant entre la première lisse intermédiaire G2 et le plan d'appui Px du premier support S1.

Préférentiellement, le garde-corps G est conformé de manière que l'espace entre la lisse supérieure G1 et la première lisse intermédiaire G2 soit strictement inférieur à 500 mm.

Préférentiellement, le garde-corps G est conformé de manière que l'espace entre la première lisse intermédiaire G2 et la deuxième lisse intermédiaire G3 soit strictement inférieur à 500 mm (Ces valeurs de 500 mm sont conformes aux normes précitées relatives aux garde-corps).

Préférentiellement, le premier support S1 comporte un cadre inférieur rectangulaire C2 et rigide, le cadre inférieur C2 comportant ladite pluralité de butées axiales qui définissent ensemble ledit plan d'appui du premier support Px. Chaque poteau donné S1a, S1b, S1c, S1d de la pluralité de poteaux du premier support S1 est relié fixement au cadre inférieur C2.

Ce cadre inférieur C2 est rigide et forme, sur sa face inférieure, une surface d'appui continue.

Ce cadre inférieur C2 est utile avec le cadre supérieur C1 qui est parallèle au cadre C2 pour rigidifier le support S1.

Grâce à ces deux cadres rigides C1 et C2 reliés entre eux, de manière rigide, par la pluralité de poteaux S1a, S1b, S1c, S1d, le support S1 peut être déplacé d'un seul bloc avec l'intégralité du garde-corps (dans le cas où l'ensemble de couverture est conformé pour ne couvrir qu'un seul des modules) ou avec une partie seulement du garde-corps dans le cas où l'ensemble de couverture 1 comporte plusieurs supports S1, S2 indépendants devant être chacun disposé sur l'un des modules de construction qui lui correspond.

Grâce au cadre C2, la masse du premier support S1 est répartie sur toute la face inférieure du cadre C2 ce qui autorise son positionnement sur n'importe quelle surface plane complémentaire (par exemple le sol, lors du stockage, ou la toiture plane du module de construction).

Préférentiellement, le cadre inférieur C2 présente une hauteur d'au moins 100 mm ce qui permet de former une plinthe de hauteur conforme aux normes précitées sur les garde-corps. La plinthe est utile pour éviter une chute d'outils depuis la toiture du module.

Comme on le comprend des différentes figures, le premier panneau photovoltaïque Pv1 appartient à un premier groupe de panneaux photovoltaïques Gp1 qui sont exclusivement portés par le premier support S1. Chaque support porte un unique groupe de panneaux qui lui correspond.

L'ensemble de couverture 1 est agencé pour sélectivement adopter une configuration de captation d'énergie solaire et une configuration de maintenance.

Dans la configuration de captation (voir par exemple les figures 1a, 1b, 1c, 3a et 4), les panneaux du premier groupe de panneaux Gp1 sont disposés de manière que deux panneaux donnés du premier groupe adjacents l'un de l'autre soient espacés l'un de l'autre d'une distance d'espacement inférieure à une valeur prédéterminée (en l'occurrence la valeur prédéterminée est par exemple choisie pour être inférieure à 20 cm, préférentiellement inférieure à 10 cm, préférentiellement inférieure à 5 cm, de manière à maximiser la surface de captation solaire par les panneaux du groupe de panneaux).

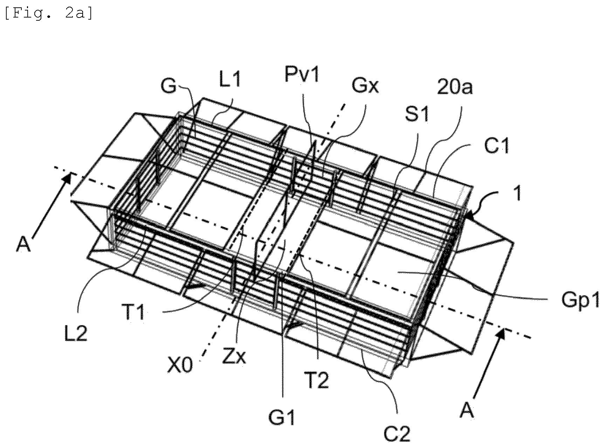

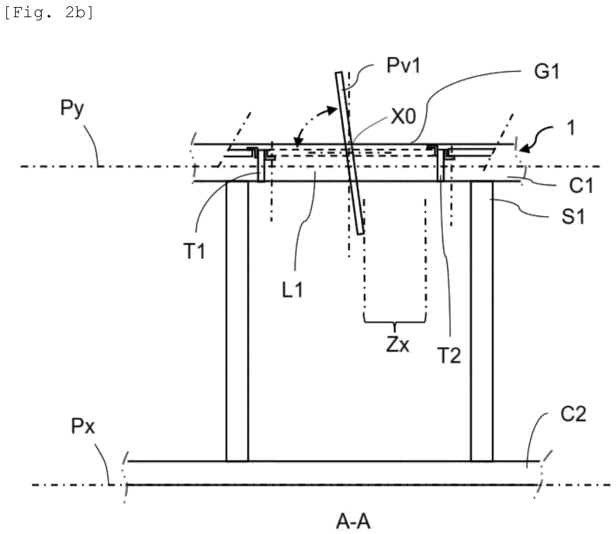

Dans la configuration de maintenance (voir par exemple les figures 2a, 2b et 3b), la distance d'espacement entre les deux panneaux donnés adjacents l'un de l'autre est strictement supérieure à ladite valeur prédéterminée et est d'au moins 35 cm, préférentiellement au moins 50 cm, préférentiellement au moins 65 cm, de manière à libérer un espace de passage Zx entre les deux panneaux donnés. L'intervenant se déplaçant sur la toiture 10a du module 10 peut ainsi avoir accès à la face supérieure de la couverture via l'espace de passage Zx tout en circulant sur la toiture 10a.

Cet accès à la face supérieure des panneaux du premier groupe est sécurisé car le garde-corps entoure l'espace de passage Zx. La configuration de maintenance est ainsi choisie pour entretenir / nettoyer tout ou partie de la face supérieure de la couverture.

Plus particulièrement, comme illustré sur les figures 2a, 2b, 3b, au moins le premier panneau Pv1 est monté pivotant, vis-à-vis du premier support S1, autour d'un pivot d'axe X0 qui lui correspond.

Il est également envisageable que d'autres panneaux du premier groupe soient aussi montés pivotants vis-à-vis du premier support par l'intermédiaires d'autres pivots d'axe horizontaux et parallèles audit axe X0.

Le pivotement d'un panneau permet à la fois de dégager un passage Zx au travers de la couverture tout en facilitant l'accès aux deux faces du panneau ainsi pivoté.

Dans le cas particulier illustré sur les figures, le pivot d'axe X0 passe au travers de pièces fixes par rapport aux poteaux S1a, S1b, S1c, S1d du premier support de manière à ce que le premier panneau Pv1 soit exclusivement porté par le premier support S1 ce qui autorise le démontage de tout ou partie du garde-corps G sans avoir à démonter les panneaux.

Dans l'exemple des figure 1a à 2b et 4, le garde-corps G est exclusivement fixé sur les poteaux du seul premier support S1 qui est agencé pour couvrir un unique module de construction 10, le garde-corps G surplombant chacun des quatre murs du module 10 qui est de forme parallélépipédique rectangle.

Dans l'exemple des figures 3a, 3b, le garde-corps G est exclusivement fixé sur des poteaux appartenant à plusieurs supports S1, S2, S3, S4 qui sont adjacents les uns des autres et qui couvrent respectivement plusieurs modules de constructions également adjacents les uns des autres.

Sur ces figures 3a, 3b, le garde-corps G surplombe uniquement les murs des modules qui sont situés à la périphérie du groupe de modules ainsi recouverts (chaque module ainsi recouvert présente une forme générale parallélépipédique rectangle, identique pour chaque module).

Dans les modes de réalisation où le premier panneau Pv1 est monté pivotant, l'axe X0 autour duquel pivote le premier panneau PV1 passe préférentiellement par des longerons L1, L2 parallèles entre eux et qui appartiennent au premier support S1.

Dans le cas où l'un desdits longerons L1, L2 se trouve en bordure extérieure de la zone centrale Zc de captation d'énergie solaire, il est alors possible de faire en sorte que ce longeron constitue également une portion dudit cadre supérieur C1 du garde-corps.

Comme la lisse supérieure du garde-corps s'étend tout autour de la zone Zc où se trouvent les panneaux du premier groupe, l'intervenant est parfaitement sécurisé même lorsque l'ensemble 1 est en configuration de maintenance.

Comme illustré par les figures 2a, 2b, les longerons L1, L2 du premier support S1 sont reliés entre eux par des traverses T1, T2 qui sont ici perpendiculaires aux longerons L1, L2.

Chaque traverse T1, T2 peut porter des butées, par exemple des cornières, pour limiter la capacité de rotation du panneau photovoltaïque Pv1 adjacent à ces traverses T1, T2 et ainsi définir une unique position de panneau adoptée en configuration de captation d'énergie.

Des moyens de verrouillage du premier panneau (ici des boulons serrant le premier panneau contre lesdites cornières) sont également utilisés pour sélectivement interdire la rotation du premier panneau au moins lorsque l'ensemble 1 est en configuration de captation.

Il est à noter que dans les modes de réalisation, comme ceux des figures 3a, 3b, où l'ensemble de couverture 1 comporte plusieurs supports de panneaux photovoltaïques S1, S2, S3, S4, ces supports sont de formes et de constitution identiques audit premier support S1, seule la position du garde-corps G variant pour s'étendre à la périphérie du groupe formé par ces supports.

Les panneaux photovoltaïques de ces autres supports S2, S3, S4 sont également préférentiellement orientables de la même manière que ledit premier panneau Pv1.

Dans un mode de réalisation non préférentiel, en alternative au pivotement du premier panneau par rapport au cadre C1, on pourrait envisager que le premier panneau soit monté coulissant par rapport au cadre C1 par l'intermédiaire d'une glissière.

Préférentiellement, comme illustré sur les figures, l'espace de passage Zx au travers de la couverture est situé en vis-à-vis direct dudit au moins un portillon Gx en position fermée.

De cette manière, un intervenant accédant à la toiture via le passage sélectivement obturé par le portillon Gx trouve, lorsque l'ensemble de couverture 1 est en configuration de maintenance, un accès direct au travers du plan Py via l'espace de passage Zx.

Préférentiellement, comme illustré sur les différentes figures, l'ensemble de couverture 1 comprend au moins une première structure latérale 20a disposée à la périphérie extérieure du garde-corps G, la première structure latérale 20a portant une pluralité de panneaux de photovoltaïques périphériques Pvx.

Chaque panneau photovoltaïque périphérique Pvx est au moins en partie disposé en vis-à-vis d'un côté externe du garde-corps G tout en s'étendant préférentiellement selon une pente descendante en s'écartant dudit garde-corps G.

De cette manière, chaque panneau photovoltaïque périphérique Pvx offre un ombrage supplémentaire à la périphérie du module de construction 10 couvert par l'ensemble de couverture.

Les panneaux photovoltaïques périphériques Pvx permettent aussi d'augmenter la surface de captation d'énergie solaire à la périphérie du ou des modules de construction, c'est-à-dire en dehors de la zone centrale de captation Zc.

Enfin en fonction de leurs pentes, les panneaux périphériques favorisent un écoulement d'eau de pluie à distance du ou des modules de construction 10 ce qui permet de les préserver.

Comme on le voit sur les figures, l'ensemble de couverture comporte plusieurs structures latérales 20a, en l'occurrence quatre structures latérales (au moins une par face externe du garde-corps G).

Chaque structure latérale donnée porte ses propres panneaux photovoltaïques périphériques Pvx et est fixée et portée par au moins une paire desdits poteaux qui lui correspond.

Chaque structure latérale donnée 20a est également soutenue par au moins une jambe de force périphérique 30 qui lui correspond. Chaque jambe de force périphérique 30 présente une extrémité supérieure articulée sur la structure latérale qu'elle supporte et une extrémité inférieure articulée avec un point fixe vis-à-vis desdits poteaux.

Dans un mode de réalisation préférentiel, la pente propre à chaque structure latérale donnée 20a peut être ajustée en variant la ou les longueurs de jambe 30 correspondant.

On peut ainsi ajuster l'orientation des panneaux périphériques Pvx pour ajuster la production d'énergie ou varier l'ombrage ou l'encombrement de l'ensemble de couverture 1.

On peut par exemple prévoir des moyens d'ajustement de pente de panneaux périphérique agencés pour sélectivement positionner l'un au moins des panneaux périphériques Pvx dans un plan vertical, un plan horizontal ou un plan incliné vers l'intérieur ou vers l'extérieur de la zone centrale Zc.

Il est à noter que chaque support de panneau donné S1, S2, S3, S4 de l'ensemble de couverture 1 selon l'invention peut aussi comporter un ou plusieurs dispositifs de fixation pour le solidariser avec le module de construction sur lequel il est posé.

Un dispositif de fixation peut comporter des butées latérales pour définir une position d'arrêt en translation de l'ensemble de couverture dans des directions longitudinales et transverse du toit recouvert. De telles butées latérales sont particulièrement utiles pour sécuriser la liaison mécanique entre l'ensemble de couverture et le module de construction, la construction présentant une résistance accrue contre des chocs latéraux ou des vibrations (par exemple vibrations d'un chantier ou d'une zone sismique).

Par exemple, chaque le module de construction peut comporter des anneaux de levage fixés sur sa structure et accessibles depuis la toiture. Un dispositif de fixation peut par exemple comprendre des parties complémentaires d'un anneau de levage, d'une équerre, platine, doigt d'indexage fixé sur le module de construction et un moyen de mise en tension pour exercer un effort de compression de l'ensemble de couverture sur le / les modules de construction. Ces dispositifs de fixation sont préférentiellement répartis aux quatre angles du cadre inférieur C2 pour éviter les mouvements relatifs entre ensemble de couverture et module(s) de construction.

## Revendications

1. Ensemble de couverture (1) pour couvrir au moins un premier module de construction (10) ayant une toiture (10a), l'ensemble de couverture (1) comportant :
- au moins un premier panneau photovoltaïque (Pv1) pour capter de l'énergie solaire et générer de l'électricité ;
- un premier support (S1) dudit au moins un premier panneau photovoltaïque (Pv1), ledit au moins un premier panneau photovoltaïque (Pv1) définissant une partie d'une surface de couverture pour s'étendre au-dessus de la toiture (10a) du premier module de construction (10), ledit premier support (S1) comportant une pluralité de poteaux (Sla, S1b, S1c, S1d) pour supporter ledit au moins un premier panneau (Pv1), **caractérisé en ce que** l'ensemble de couverture (1) comporte un garde-corps (G) porté au moins en partie par certains au moins des poteaux (Sla, S1b, S1c, S1d) de la pluralité de poteaux du premier support, ledit garde-corps (G) ayant une lisse supérieure (G1) définissant une limite périphérique d'une zone centrale (Zc) de captation d'énergie solaire dans laquelle se trouve ledit au moins un premier panneau photovoltaïque (Pv1).

2. Ensemble de couverture selon la revendication 1, dans lequel ledit premier support (S1) présente une pluralité de butées axiales définissant ensemble un plan d'appui du premier support (Px), chaque poteau donné (S1a, S1b, S1c, S1d) de la pluralité de poteaux du premier support (S1) s'étend suivant une direction longitudinale (X) du poteau donné qui est sécante avec le plan d'appui (Px) du premier support, un angle minimum entre la direction longitudinale (X) du poteau donné et le plan d'appui (Px) étant compris entre 40° et 90°.

3. Ensemble de couverture selon la revendication 2, dans lequel, l'ensemble de couverture présente une surface totale couverte par une pluralité de panneaux photovoltaïques qui comprend ledit au moins un premier panneau photovoltaïque, la surface totale couverte étant conformée de manière qu'elle interdit tout passage d'une sphère de diamètre supérieur ou égal à 30 cm au travers de la surface totale couverte et entre ladite surface totale couverte et ledit garde-corps.

4. Ensemble de couverture selon l'une quelconque des revendications 2 ou 3, dans lequel la lisse supérieure (G1) comporte une surface périphérique supérieure qui est intégralement disposée entre 400 mm et 1500 mm, préférentiellement entre 1000 mm et 1100 mm de hauteur par rapport audit plan d'appui (Px) du premier support.

5. Ensemble de couverture (1) selon l'une quelconque des revendications 1 à 4, dans lequel la lisse supérieure (G1) du garde-corps (G) forme un cadre supérieur rectangulaire (C1) s'étendant dans un plan (Py) du cadre supérieur (C1), chaque poteau (Sla, S1b, S1c, S1d) de la pluralité de poteaux du premier support (S1) ayant une direction longitudinale propre (X) qui forme par rapport au plan (Py) du cadre supérieur (C1) un angle compris entre 40°et 90°.

6. Ensemble de couverture (1) selon les revendications 4 et 5 combinées, dans lequel le garde-corps (G) présente un premier portillon (Gx) mobile par rapport au cadre supérieur (C1) entre une position fermée et une position ouverte, ledit premier portillon (Gx) en position ouverte libérant un passage au travers du garde-corps (G)de largeur comprise entre 750 mm et 1200 mm.

7. Ensemble de couverture (1) selon la revendication 6, comportant en outre un dispositif de rappel automatique du portillon vers sa position fermée.

8. Ensemble de couverture (1) selon l'une quelconque des revendications 6 ou 7, dans lequel le garde-corps (G) comporte une ou plusieurs lisses intermédiaires (G2, G3) s'étendant chacune entre la lisse supérieure (G1) et le plan d'appui (Px) du premier support (S1) pour avoir une distance entre lisses inférieure à 500 mm.

9. Ensemble de couverture (1) selon l'une quelconque des revendications 1 à 8 combinée à la revendication 2, dans lequel le premier support (S1) comporte un cadre inférieur rectangulaire (C2) et rigide, le cadre inférieur (C2) comportant ladite pluralité de butées axiales définissant ensemble ledit plan d'appui du premier support (Px), chaque poteau donné (S1a, S1b, S1c, S1d) de la pluralité de poteaux du premier support (S1) étant relié fixement au cadre inférieur (C2).

10. Ensemble de couverture selon l'une quelconque des revendications 1 à 9, dans lequel ledit premier panneau photovoltaïque (Pv1) appartient à un premier groupe de panneaux photovoltaïques (Gp1), les panneaux photovoltaïques du premier groupe étant exclusivement portés par le premier support (S1), l'ensemble de couverture étant agencé pour sélectivement adopter une configuration de captation d'énergie solaire et une configuration de maintenance, dans la configuration de captation les panneaux du premier groupe de panneaux sont disposés de manière que deux panneaux donnés du premier groupe adjacents l'un de l'autre soient espacés l'un de l'autre d'une distance d'espacement inférieure à une valeur prédéterminée, dans la configuration de maintenance, la distance d'espacement entre les deux panneaux donnés adjacents l'un de l'autre est strictement supérieure à ladite valeur prédéterminée et est d'au moins 35 cm, préférentiellement au moins 50 cm, préférentiellement au moins 65 cm, de manière à libérer un espace de passage (Zx) entre les deux panneaux donnés.

11. Ensemble de couverture (1) selon la revendication 10 combinée à la revendication 6, dans lequel l'espace de passage (Zx) est en vis-à-vis dudit au moins un portillon (Gx) en position fermé.

12. Ensemble de couverture (1) selon l'une quelconque des revendications 1 à 11, comprenant au moins une première structure latérale (20a) disposée à la périphérie extérieure du garde-corps (G), la première structure latérale (20a) portant une pluralité de panneaux de photovoltaïques périphériques (Pvx), chaque panneau photovoltaïque périphérique (Pvx) étant au moins en partie disposé en vis-à-vis d'un côté externe du garde-corps (G) tout en s'étendant selon une pente descendante en s'écartant dudit garde-corps (G).

13. Construction (0) comportant :
- un premier module de construction (10) ayant une face supérieure plane formant ladite toiture (10a) du premier module de construction (10) ; et
- un ensemble de couverture (0) selon l'une quelconque des revendications 1 à 12, le premier support (S1) étant placé au-dessus de la toiture (10a) du premier module de construction (10) et étant porté par ledit premier module de construction (10).

14. Construction (0) selon la revendication 13, dans laquelle l'intégralité du premier support (S1) est à la verticale de la toiture (10a) du premier module de construction (10), la construction (0) comportant un deuxième module de construction (102) ayant une face supérieure plane formant une toiture du deuxième module de construction (102), les toitures des premier et deuxième modules de construction (10, 102) étant coplanaires entre elles, un bord rectiligne de la toiture du premier module (10) étant adjacent d'un bord rectiligne de la toiture du deuxième module de construction (102), l'ensemble de couverture (1) étant agencé pour couvrir les premier et deuxième modules de construction (10, 102), l'ensemble de couverture (1) comportant :
- un deuxième groupe de panneaux photovoltaïques pour capter de l'énergie solaire et générer de l'électricité ; et
- un deuxième support (S2) dudit un deuxième groupe de panneaux photovoltaïques, ledit deuxième groupe de panneaux photovoltaïques définissant une partie d'une surface de couverture s'étendant exclusivement au-dessus de la toiture du deuxième module de construction (102), le deuxième support (S2) comportant une pluralité de poteaux pour supporter ledit deuxième groupe de panneaux photovoltaïques, ledit garde-corps (G) étant porté au moins en partie par certains au moins des poteaux de la pluralité de poteaux du deuxième support (S2), le deuxième groupe de panneaux photovoltaïques se trouvant dans ladite zone centrale (Zc) de captation d'énergie solaire délimitée par la lisse supérieure (G1) du garde-corps (G).

## Patentansprüche

1. Abdeckungsanordnung (1) zur Abdeckung zumindest eines ersten Gebäudemoduls (10) mit einem Dach (10a), wobei die Abdeckungsanordnung (1) enthält:
- zumindest ein erstes Photovoltaikpanel (Pv1) zur Gewinnung von Sonnenenergie und zur Erzeugung von elektrischem Strom;
- einen ersten Träger (S1) für das zumindest eine Photovoltaikpanel (Pv1), wobei das zumindest eine Photovoltaikpanel (Pv1) einen Teil einer Abdeckungsfläche definiert und sich dabei oberhalb des Dachs (10a) des ersten Gebäudemoduls (10) erstreckt, wobei der erste Träger (S1) eine Mehrzahl von Stützen (S1a, S1b, S1c, S1d) enthält, welche das zumindest eine erste Panel (Pv1) abstützen, **dadurch gekennzeichnet, dass** die Abdeckungsanordnung (1) ein Schutzgeländer (G) enthält, das zumindest teilweise von zumindest manchen der Stützen (S1a, S1b, S1c, S1d) aus der Mehrzahl von Stützen des ersten Trägers getragen wird, wobei das Schutzgeländer (G) einen oberen Holm (G1) aufweist, welcher eine Umfangsbegrenzung eines zentralen Bereichs (Zc) zur Sonnenenergiegewinnung definiert, in welchem sich das zumindest eine erste Photovoltaikpanel (Pv1) befindet.

2. Abdeckungsanordnung nach Anspruch 1, wobei der erste Träger (S1) eine Mehrzahl von axialen Anschlägen aufweist, die gemeinsam eine Auflageebene (Px) des ersten Trägers definieren, wobei sich jede Stütze (S1a, S1b, S1c, S1d) aus der Mehrzahl von Stützen des ersten Trägers (S1) jeweils entlang einer Längsrichtung (X) der betreffenden Stütze erstreckt, welche die Auflageebene (Px) des ersten Trägers schneidet, wobei ein zwischen der Längsrichtung (X) der betreffenden Stütze und der Auflageebene (Px) gebildete Minimalwinkel zwischen 40° und 90° beträgt.

3. Abdeckungsanordnung nach Anspruch 2, wobei die Abdeckungsanordnung eine von einer Mehrzahl von Photovoltaikpanels bedeckte Gesamtfläche aufweist, welche das zumindest eine erste Photovoltaikpanel umfasst, wobei die bedeckte Gesamtfläche derart ausgebildet ist, dass sie verhindert, dass eine Kugel mit einem Durchmesser größer oder gleich 30 cm durch die bedeckte Gesamtfläche sowie zwischen der bedeckten Gesamtfläche und dem Schutzgeländer hindurchtritt.

4. Abdeckungsanordnung nach einem der Ansprüche 2 oder 3, wobei der obere Holm (G1) eine obere Umfangsfläche enthält, die zur Gänze in einer Höhe zwischen 400 mm und 1500 mm, vorzugsweise zwischen 1000 mm und 1100 mm, in Bezug auf die Auflagefläche (Px) des ersten Trägers angeordnet ist.

5. Abdeckungsanordnung (1) nach einem der Ansprüche 1 bis 4, wobei der obere Holm (G1) des Schutzgeländers (G) einen rechteckförmigen Oberrahmen (C1) bildet, der sich in einer Ebene (Py) des Oberrahmens (C1) erstreckt, wobei jede Stütze (S1a, S1b, S1c, S1d) aus der Mehrzahl von Stützen des ersten Trägers (S1) eine eigene Längsrichtung (X) aufweist, die in Bezug auf die Ebene (Py) des Oberrahmens (C1) einen Winkel zwischen 40° und 90° bildet.

6. Abdeckungsanordnung (1) nach Anspruch 4 in Kombination mit Anspruch 5, wobei das Schutzgeländer (G) ein erstes Tor (Gx) aufweist, das in Bezug auf den Oberrahmen (C1) zwischen einer geschlossenen Stellung und einer offenen Stellung beweglich ist, wobei das erste Tor (Gx) in seiner offenen Stellung einen Durchgang mit einer Breite von 750 mm bis 1200 mm in dem Schutzgeländer (G) freigibt.

7. Abdeckungsanordnung (1) nach Anspruch 6, ferner enthaltend eine automatische Rückstellvorrichtung, welche das Tor in seine geschlossene Stellung zurückstellt.

8. Abdeckungsanordnung (1) nach einem der Ansprüche 6 oder 7, wobei das Schutzgeländer (G) einen oder mehrere Zwischenholme (G2, G3) enthält, die sich jeweils mit einem Zwischenholmabstand von weniger als 500 mm zwischen dem oberen Holm (G1) und der Auflageebene (Px) des ersten Trägers (S1) erstrecken.

9. Abdeckungsanordnung (1) nach den Ansprüchen 1 bis 8 in Kombination mit Anspruch 2, wobei der erste Träger (S1) einen rechteckförmigen und starren Unterrahmen (C2) enthält, wobei der Unterrahmen (C2) die Mehrzahl von axialen Anschlägen enthält, die gemeinsam die Auflageebene (Px) des ersten Trägers definieren, wobei jede Stütze (S1a, S1b, S1c, S1d) aus der Mehrzahl von Stützen des ersten Trägers (S1) jeweils mit dem Unterrahmen (C2) fest verbunden ist.

10. Abdeckungsanordnung nach einem der Ansprüche 1 bis 9, wobei das erste Photovoltaikpanel (Pv1) zu einer ersten Gruppe von Photovoltaikpanels (Gp1) gehört, wobei die Photovoltaikpanels der ersten Gruppe ausschließlich von dem ersten Träger (S1) getragen werden, wobei die Abdeckungsanordnung dafür ausgelegt ist, selektiv eine Konfiguration zur Solarenergiegewinnung und eine Instandhaltungs-Konfiguration anzunehmen, wobei in der Energiegewinnungs-Konfiguration die Panels aus der ersten Gruppe von Panels derart angeordnet sind, dass zwei benachbarte Panels aus der ersten Gruppe mit einem Abstand zueinander beabstandet sind, der geringer ist als ein vorbestimmter Wert, wobei in der Instandhaltungs-Konfiguration der Abstand zwischen den beiden benachbarten Panels strikt größer ist als der vorbestimmte Wert und zumindest 35 cm, vorzugsweise zumindest 50 cm, besonders bevorzugt zumindest 65 cm beträgt, sodass ein Durchgangsraum (Zx) zwischen diesen beiden Panels entsteht.

11. Abdeckungsanordnung (1) nach Anspruch 10 in Kombination mit Anspruch 6, wobei der Durchgangsraum (Zx) dem Tor (Gx) in seiner geschossenen Stellung gegenüberliegend angeordnet ist.

12. Abdeckungsanordnung (1) nach einem der Ansprüche 1 bis 11, umfassend zumindest eine erste Seitenstruktur (20a), die am Außenumfang des Schutzgeländers (G) angeordnet ist, wobei die erste Seitenstruktur (20a) eine Mehrzahl von Rand-Photovoltaikpanels (Pvx) trägt, wobei jedes Rand-Photovoltaikpanel (Pvx) zumindest teilweise einer Außenseite des Schutzgeländers (G) gegenüberliegend angeordnet ist und sich dabei gemäß einer abfallenden Neigung von dem Schutzgeländer weg erstreckt.

13. Konstruktion (0), enthaltend:
- ein erstes Gebäudemodul (10) mit einer ebenen Oberseite, welche das Dach (10a) des ersten Gebäudemoduls (10) bildet; und
- eine Abdeckungsanordnung (0) nach einem der Ansprüche 1 bis 12, wobei der erste Träger (S1) oberhalb des Dachs (10a) des ersten Gebäudemoduls (10) platziert ist und von dem ersten Gebäudemodul (10) getragen wird.

14. Konstruktion (0) nach Anspruch 13, wobei der erste Träger (S1) zur Gänze senkrecht zu dem Dach (10a) des ersten Gebäudemoduls (10) steht, wobei die Konstruktion (0) ein zweites Gebäudemodul (102) mit einer ebenen Oberseite enthält, die ein Dach des zweiten Gebäudemoduls (102) bildet, wobei die Dächer des ersten und des zweiten Gebäudemoduls (10, 102) komplanar zueinander sind, wobei ein geradliniger Rand des Dachs des ersten Moduls (10) an einen geradlinigen Rand des Dachs des zweiten Moduls (102) angrenzt, wobei die Abdeckungsanordnung (1) dafür ausgelegt ist, das erste und das zweite Gebäudemodul (10, 102) abzudecken, wobei die Abdeckungsanordnung (1) enthält:
- eine zweite Gruppe von Photovoltaikpanels zur Gewinnung von Sonnenenergie und zur Erzeugung von elektrischem Strom; und
- einen zweiten Träger (S2) für die zweite Gruppe von Photovoltaikpanels, wobei die zweite Gruppe von Photovoltaikpanels einen Teil einer Abdeckungsfläche definiert, die sich ausschließlich oberhalb des Dachs des zweiten Gebäudemoduls (102) erstreckt, wobei der zweite Träger (S2) eine Mehrzahl von Stützen enthält, welche die zweite Gruppe von Photovoltaikpanels abstützen, wobei das Schutzgeländer (G) zumindest teilweise von zumindest manchen der Stützen aus der Mehrzahl von Stützen des zweiten Trägers (S2) getragen wird, wobei sich die zweite Gruppe von Photovoltaikpanels in dem zentralen Bereich (Zc) zur Sonnenenergiegewinnung befindet, der von dem oberen Holm (G1) des Schutzgeländers (G) begrenzt wird.

## Claims

1. Cover assembly (1) for covering at least one first building module (10) having a roof (10a), the cover assembly (1) comprising:
- at least one first solar panel (Pv1) for harvesting solar energy and generating electricity;
- a first support (S1) for said at least one first solar panel (Pv1), said at least one first solar panel (Pv1) defining part of a cover surface for extending above the roof (10a) of the first building module (10), said first support (S1) comprising a plurality of posts (Sla, S1b, S1c, S1d) for supporting said at least one first panel (Pv1), **characterised in that** the cover assembly (1) comprises a guardrail (G) borne at least in part by at least some of the posts (Sla, S1b, S1c, S1d) of the plurality of posts of the first support, said guardrail (G) having an upper rail (G1) defining a peripheral limit of a central zone (Zc) for harvesting solar energy in which said at least one first solar panel (Pv1) is located.

2. Cover assembly according to claim 1, wherein said first support (S1) has a plurality of axial stops together defining a support plane of the first support (Px), each given post (Sla, S1b, S1c, S1d) of the plurality of posts of the first support (S1) extends in a longitudinal direction (X) of the given post which is secant with the support plane (Px) of the first support, a minimum angle between the longitudinal direction (X) of the given post and the support plane (Px) being between 40° and 90°.

3. Cover assembly according to claim 2, wherein the cover assembly has a total surface covered by a plurality of solar panels that comprises said at least one first solar panel, the total covered surface being configured such that it prevents a sphere having a diameter of greater than or equal to 30 cm from passing through the total covered surface and between said total covered surface and said guardrail.

4. Cover assembly according to any of claims 2 or 3, wherein the upper rail (G1) comprises an upper peripheral surface that is entirely disposed at a height of between 400 mm and 1500 mm, preferably between 1000 mm and 1100 mm, with respect to said support plane (Px) of the first support.

5. Cover assembly (1) according to any of claims 1 to 4, wherein the upper rail (G1) of the guardrail (G) forms a rectangular upper frame (C1) extending in a plane (Py) of the upper frame (C1), each post (Sla, S1b, S1c, S1d) of the plurality of posts of the first support (S1) having a distinct longitudinal direction (X) which forms an angle of between 40° and 90° with respect to the plane (Py) of the upper frame (C1).

6. Cover assembly (1) according to claims 4 and 5 combined, wherein the guardrail (G) has a first gate (Gx) which is movable relative to the upper frame (C1) between a closed position and an open position, said first gate (Gx) in the open position providing a passage through the guardrail (G) having a width of between 750 mm and 1200 mm.

7. Cover assembly (1) according to claim 6, further comprising a device for automatically returning the gate to its closed position.

8. Cover assembly (1) according to any of claims 6 or 7, wherein the guardrail (G) comprises one or more intermediate rails (G2, G3) each extending between the upper rail (G1) and the support plane (Px) of the first support (S1) such that the distance between rails is less than 500 mm.

9. Cover assembly (1) according to any of claims 1 to 8 combined with claim 2, wherein the first support (S1) comprises a rectangular and rigid lower frame (C2), the lower frame (C2) comprising said plurality of axial stops together defining said support plane of the first support (Px), each given post (Sla, S1b, S1c, S1d) of the plurality of posts of the first support (S1) being rigidly connected to the lower frame (C2).

10. Cover assembly according to any of claims 1 to 9, wherein said first solar panel (Pv1) belongs to a first group of solar panels (Gp1), the solar panels of the first group being exclusively borne by the first support (S1), the cover assembly being arranged so as to selectively adopt a solar energy harvesting configuration and a maintenance configuration, in the harvesting configuration the panels of the first group of panels are disposed such that two given mutually adjacent panels of the first group are spaced apart from one another at a spacing distance of less than a predetermined value, in the maintenance configuration the spacing distance between the two given mutually adjacent panels is strictly greater than said predetermined value and is at least 35 cm, preferably at least 50 cm, preferably at least 65 cm, so as to provide a passage space (Zx) between the two given panels.

11. Cover assembly (1) according to claim 10 combined with claim 6, wherein the passage space (Zx) is opposite said at least one gate (Gx) in the closed position.

12. Cover assembly (1) according to any of claims 1 to 11, comprising at least one first lateral structure (20a) disposed on the outer periphery of the guardrail (G), the first lateral structure (20a) bearing a plurality of peripheral solar panels (Pvx), each peripheral solar panel (Pvx) being disposed at least in part opposite an outer side of the guardrail (G) while extending along a descending slope away from said guardrail (G).

13. Building (0) comprising:
- a first building module (10) having a planar upper face forming said roof (10a) of the first building module (10); and
- a cover assembly (0) according to any of claims 1 to 12, the first support (S1) being placed above the roof (10a) of the first building module (10) and being borne by said first building module (10).

14. Building (0) according to claim 13, wherein the entire first support (S1) is vertical with respect to the roof (10a) of the first building module (10), the building (0) comprising a second building module (102) having a planar upper face forming a roof of the second building module (102), the roofs of the first and second building modules (10, 102) being coplanar with one another, a straight edge of the roof of the first module (10) being adjacent to a straight edge of the roof of the second building module (102), the cover assembly (1) being arranged so as to cover the first and second building modules (10, 102), the cover assembly (1) comprising:
- a second group of solar panels for harvesting solar energy and generating electricity;
and
- a second support (S2) for said one second group of solar panels, said second group of solar panels defining part of a cover surface extending exclusively above the roof of the second building module (102), the second support (S2) comprising a plurality of posts for supporting said second group of solar panels, said guardrail (G) being borne at least in part by at least some of the posts of the plurality of posts of the second support (S2), the second group of solar panels being located in said central zone (Zc) for harvesting solar energy delimited by the upper rail (G1) of the guardrail (G).
